Europäisches Patentamt

European Patent Office

Office européen des brevets

(11) Veröffentlichungsnummer: **0 002 799**
A1

# EUROPÄISCHE PATENTANMELDUNG

(21) Anmeldenummer: **78101790.0**

(22) Anmeldetag: **20.12.78**

(51) Int. Cl.²: **B 29 D 3/00**, B 29 D 3/02

(30) Priorität: **27.12.77 AT 9306/77**

(43) Veröffentlichungstag der Anmeldung: **11.07.79**
**Patentblatt 79/14**

(84) Benannte Vertragsstaaten: **BE CH DE FR GB IT LU NL SE**

(71) Anmelder: **Pichler, Heinrich, Funkestrasse 3/36, A-5020 Salzburg (AT)**
(84) Benannte Vertragsstaaten: **BE CH DE FR GB IT LU NL SE**

(71) Anmelder: **Erismann, Hans, Neue Bruggerstrasse 292, CH-5506 Mägenwil (CH)**
(84) Benannte Vertragsstaaten: **BE CH DE FR GB IT LU NL SE**

(71) Anmelder: **Erismann, Hans-Peter, Neue Bruggerstrasse 292, CH-5506 Mägenwil (CH)**
(84) Benannte Vertragsstaaten: **BE CH DE FR GB IT LU NL SE**

(72) Erfinder: **Erismann, Hans, Neue Bruggerstrasse 292, CH-5506 Mägenwil (CH)**

(74) Vertreter: **Lorenz, Eduard et ai, Widenmayerstrasse 23, D-8000 München 22 (DE)**

(54) **Verfahren und Vorrichtung zur Herstellung von längliche Verstärkungselemente, insbesondere Glasfasern grosser Länge enthaltenden Kunststoffteilen.**

(57) Verfahren und Vorrichtung zur Herstellung von, längliche Verstärkungselemente (3), insbesondere Glasfasern, großer Länge enthaltenden Kunststoffteilen (1), wobei in einen weichen Oberflächenbereich (4) des Kunststoffteiles (1) mittels einer Rillenformeinrichtung (6) mindestens eine Rille (2) eingeformt wird, in die das Verstärkungselement (3) eingelegt wird, und die anschließend vor Erhärtung des Oberflächenbereiches (4) durch eine Schließeinrichtung (8) wieder verschlossen wird.

- 1 -

Verfahren und Vorrichtung zur Herstellung
von längliche Verstärkungselemente, insbesondere Glasfasern großer Länge enthaltenden
Kunststoffteilen.

Die Erfindung bezieht sich auf ein Verfahren zur Herstellung von längliche Verstärkungselemente, insbesondere Glasfasern großer Länge enthaltenden Kunststoffteilen auf eine Vorrichtung zur Durchführung
des Verfahrens.

Faserverstärkte Kunststoffteile sind allgemein bekannt
und werden vielfach verwendet. Dementsprechend wurden
auch bereits eine Vielzahl verschiedener Verfahren
zu deren Herstellung entwickelt.

Eine Möglichkeit, die die Verarbeitung von insbesondere
thermoplastischen Kunststoffen zuläßt, besteht darin,
daß Kunststoffgranulat, das Lang- oder Kurzfasern enthält, plastifiziert und in Spritzgießmaschinen verarbeitet wird. Bei einer zweiten Art der Herstellung, bei
der Duroplaste verarbeitet wurden, werden Fasern oder
Matten von Fasern in eine Form eingelegt und diese

- 2 -

mit dem Kunstharz gefüllt bzw. kunstharzgetränkte Fasern bzw. Matten untereinander verpreßt. Eine weitere Möglichkeit, das Wickelverfahren zur Herstellung von Rohren, besteht darin, daß kunstharzgetränkte Matten um einen Kern gewickelt werden, der nach der Erhärtung wieder entfernt wird.

Die Länge der Glasfasern, die mit dem Kunststoffgranulat in Spritzgießmaschinen verarbeitet werden, ist auf die Granulatgröße beschränkt. Lange Fasern, sogenannte Rovings, können auf diese Weise nicht in den Kunststoffteil eingearbeitet werden.

Die anderen beschriebenen Verfahren zur Herstellung von faserverstärkten Kunststoffteilen aus härtenden Kunstharzen bieten die Möglichkeit Rovings zu verarbeiten, sind jedoch mit beträchtlichem Arbeits- und Zeitaufwand verbunden.

Die Erfindung schlägt nun eine weitere Möglichkeit zur Verstärkung von Erzeugnissen aus den verschiedensten Kunststoffen, sowohl aus Thermoplasten als auch aus Duroplasten mit oder ohne Füllmaterial vor, die darin besteht, daß in einen weichen Oberflächenbereich des Kunststoffteiles mindestens eine Rille eingeformt wird, worauf mindestens ein Verstärkungselement in die Rille eingelegt und diese vor Erhärtung des Oberflächenbereiches wieder geschlossen wird.

Mit dem erfindungsgemäßen Verfahren ist es nunmehr möglich, die Verstärkungselemente nicht im unmittelbaren Formungsvorgang sondern in einem nachfolgenden Arbeitsschritt einzuarbeiten. Es können

also insbesondere Kunststoffteile in beliebiger bekannter Weise erzeugt werden, wodurch die bisher notwendigen arbeits- und zeitintensiven Maßnahmen wegfallen, in die in weiterer Folge die Verstärkungselemente eingebracht werden. Dabei tritt noch ein zusätzlicher interessanter Faktor in Erscheinung. Die Verstärkung der Kunststoffteile ist insbesondere in den Oberflächenbereichen, im allgemeinen jedoch nicht im Kernbereich notwendig. Diese Verteilung von Verstärkungselementen bringt bei bekannten Verfahren zur Herstellung von räumlichen Kunststoffteilen zusätzlichen Arbeitsaufwand, sodaß darauf im allgemeinen verzichtet und der Kernbereich ebenfalls verstärkt wird.

Der für die Durchführung des erfindungsgemäßen Verfahrens notwendige weiche Oberflächenbereich des Kunststoffteiles kann bei thermoplastischen Kunststoffen durch eine örtliche Erwärmung der Oberfläche vor Formung der Rille ohne weiteres erzielt werden. Diese Vorgangsweise ist beim Umformen von derartigen Kunststoffteilen bekannt.

Bei Duroplasten, die nicht durch Wärmeeinwirkung erweicht werden können, wird beispielsweise das erfindungsgemäße Verfahren nach der Formung des Kunststoffteiles noch vor der Aushärtung des Harzes durchgeführt. Das erfindungsgemäße Verfahren kann diskontinuierlich in einer presseähnlichen Vorrichtung in der Weise durchgeführt werden, daß in den Kunststoffteil ein die Rille formendes Element eingedrückt, und diese nach

- 4 -

Einlegen des Verstärkungselementes wieder geschlossen wird. Dies ergibt auch die Möglichkeit nicht nur längs-, sondern auch Querverstärkungen einzuarbeiten.

Zur Verstärkung von langgestreckten Kunststoffteilen, die in Längsrichtung bewehrt werden sollen, beispielsweise von Kunststoffstäben oder Rohren, sieht eine Ausführung vor, daß der Kunststoffteil entlang eines Führungsstückes einer ortsfesten Vorrichtung bewegt wird.

Hiedurch wird eine kontinuierliche Arbeitsweise erzielt, durch die eine über die Länge durchgehende Verstärkung gebildet wird.

Die Vorrichtung zur Durchführung des Verfahrens sieht vor, daß die Vorrichtung, die vorzugsweise mit einer Heizeinrichtung versehen ist, mindestens eine in den weichen Oberflächenbereich des Kunststoffteiles eindringende Rillenformeinrichtung, mindestens eine Einrichtung zum Einlegen eines Verstärkungselementes und mindestens eine Rillenschließeinrichtung aufweist.

Für die diskontinuierliche Durchführung des Verfahrens kann beispielsweise ein Preßstempel mit einer oder mehreren wulstartigen Erhebungen vorgesehen sein, durch die in den weichen Oberflächenbereich eine oder mehrere Rillen geformt werden. Nach Einlegen des Verstärkungselementes werden die Rillen wieder, beispielsweise durch einen zweiten Preßstempel, geschlossen.

Eine bevorzugte Ausführung der Vorrichtung für
die kontinuierliche Arbeitsweise sieht vor, daß
die Vorrichtung und der zu verstärkende Kunststoffteil relativ zueinander verschiebbar sind.

Bei dieser Ausführung weist die Rillenformeinrichtung bevorzugt eine pflugscharähnliche Rillenschneide auf, die während der Bewegung des Kunststoffteiles die Rille bildet. Das Verstärkungselement
wird vorzugsweise durch einen zylinderischen
Hohlkörper durch das Bewehrungsstück der Vorrichtung durchgeführt und in die Rille eingelegt. Der
zylindrische Hohlkörper ist dazu vorzugsweise in
einen schrägen Winkel zur Bewegungsrichtung geneigt. Das Schließen der Rille erfolgt durch ein
Glättelement, das hinter dem zylindrischen Hohlkörper angeordnet ist. Das Glättelement kann beispielsweise durch zwei einander nähernde Führungsflächen gebildet sein, die die beiden seitlich
der Rille während des Schneidens aufgeworfenen
Wülste wieder in die mit den Verstärkungselement
versehene Rille zurückbewegen und glätten.

Besonders vorteilhaft ist es, wenn die Rillenschneide bzw. Rillenschließeinrichtung an einen
in das Führungsstück eingesetzten Bolzen ausgebildet sind, der als Schraubbolzen ausgebildet
ist. Hiedruch kann einerseits die Schneidtiefe
der Rillenschneide und andererseits der Anpreßdruck des Glättelementes eingestellt und verändert werden.

- 6 -

Eine bevorzugte Ausführung sieht einen einzigen Schraubbolzen mit einer axialen Bohrung vor, an dessen vorderem Ende sowohl die Rillenschneide als auch das Glättelement, beispielsweise die Führungsflächen ausgebildet sind, wobei dazwischen die axiale Bohrung mündet, durch die das Verstärkungselement zugeführt wird.

Die Vorrichtung weist bevorzugt mehrere derartige Schraubbolzen auf, die über den Umfang des Führungsstückes verteilt sind.

Nachstehend wird nun die Erfindung an Hand der Figuren der beiliegenden Zeichnungen näher beschrieben, ohne jedoch darauf beschränkt zu sein. Hierin sind vier Ausführungsbeispiele einer Vorrichtung für einen kontinuierlichen Arbeitsablauf dargestellt, wobei die
Fig. 1-4 schematische Längsschnitte von vier Vorrichtungen zur Einbettung eines Verstärkungselementes,
die Fig. 5 und 6 Längsschnitte durch Schraubbolzen nach den Fig. 2 und Fig. 4, und
die Fig. 7 und 8 Schrägansichten des vorderen Endes der Bolzen nach den Fig. 5 und 6 zeigen.

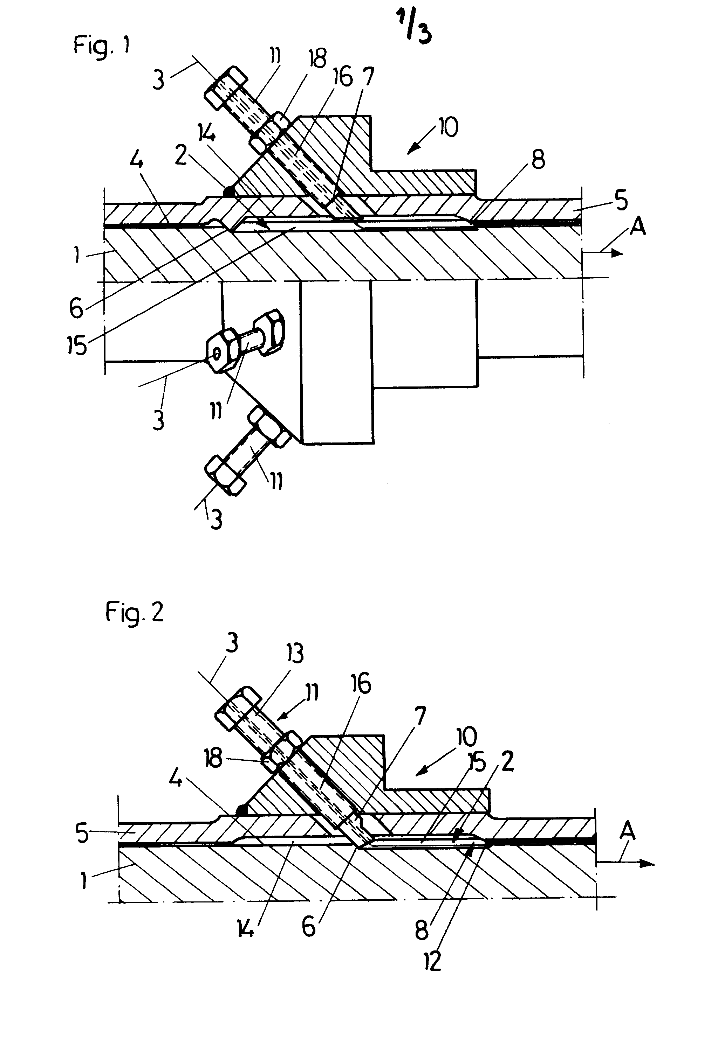

Im ersten Ausführungsbeispiel nach Fig. 1 ist eine erfindungsgemäße Vorrichtung 10 im Teillängsschnitt dargestellt, die zur Verstärkung von Kunststoffstäben-bzw. rohren mit Verstärkungselemente, etwa Rovings, Verwendung finden kann. Der mit 1 bezeichnete Kunststoffteil wird in Richtung
des Pfeiles A entlang eines Führungsstückes 5
der ortsfesten Vorrichtung 10 bewegt. Die in Bewegungsrichtung zuerst angeordnete Rillenformeinrichtung 6 ist in dieser Ausführung durch einen
etwa keilförmigen Vorsprung des Führungsstückes 5
gebildet und schneidet in den weichen Oberflächenbereich 4 des Kunststoffteiles 1 eine Rille 2.

Unmittelbar vor dieser Stelle beginnt ein rückversetzter Abschnitt 14 des Führungsstückes 5, in diesem Fall eine Erweiterung des Rohres, das das Führungsstück 5 bildet. Dadurch entsteht ein freier
Zwischenraum zwischen dem Kunststoffteil und dem
Abschnitt 14, in den das durch die Rillenformeinrichtung 6 in seitlichen Wülsten 15 aufgeworfene
Material des Oberflächenbereiches 4 zu liegen
kommt.

Mit Abstand dahinter ist in das Führungsstück 5 eine
Einrichtung 7 zur Zuführung und zum Einlegen eines
Verstärkungselementes 3 eingesetzt, die aus einem
Hohlkörper 11, der durch einen Schraubbolzen mit
Bohrung 16 gebildet ist, besteht. Das vordere Ende
des Hohlköprers, der in einem schrägen Winkel zur
Bewegungseinrichtung verläuft, liegt über der Rile 2, wodurch das zugeführte Verstärkungselement
3 bei Bewegung des Kunststoffteiles 1 in die Rille
2 zu liegen kommt. Ebenfalls wieder mit Abstand
dahinter ist die Rillenschließeinrichtung 8 vorgesehen, die in diesem Ausführungsbeispiel durch ein Glättelement 12 gebildet wird, das aus dem Ende des rückversetzten Abschnittes 14 des Führungsstückes 5 besteht. Die aufgeworfenen Wülste 15 werden dort wieder in die Rille 2 gedrückt, wodurch die Einbettung des Verstärkungselementes 3 abgeschlossen ist.

Besteht ein Teil 1 aus thermoplastischem Kunststoff, ist die Vorrichtung 10 noch mit einer nicht dargestellten Heizeinrichtung versehen, wodurch eine örtliche Erweichung des Oberflächenbereiches 4 erreicht wird. Für die Verstärkung von Duroplasten ist die erfindungsgemäße Vorrichtung 10 unmittelbar im Anschluß an das Formwerkzeug vorgesehen, sodaß die Einbettung der Verstärkungselemente in das noch nicht ausgehärtete Kunstharz erfolgen kann. Bevorzugt ist auch hier eine Heizeinrichtung vorgesehen, die ein allzu rasches Aushärten des Harzes hintanhält.

Wie aus Fig. 1 weiter ersichtlich, können mit Hilfe der erfindungsgemäßen Vorrichtung 10 gleichzeitig mehrere Verstärkungselemente 3 in den Kunststoffteil 1 eingearbeitet werden, wozu über den Umfang verteilt mehrere Rillenformeinrichtungen 6, Zuführeinrichtungen 7 und Rillenschließeinrichtungen 8 vorgesehen sind.

Wie bereits erwähnt, werden mit Hilfe der erfindungsgemäßen Vorrichtung 10 die Verstärkungselemente 3 nur in den Oberflächenbereich des Kunststoffteiles 1 eingearbeitet, in dem die Verstärkung im Gegensatz zum Kernbereich erforderlich ist.

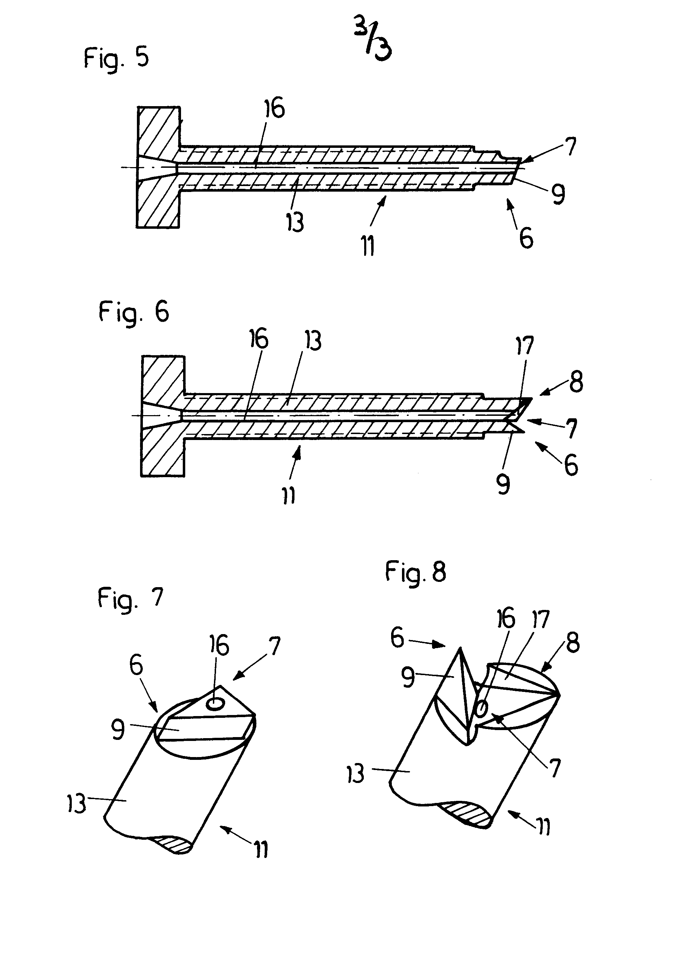

Die Fig. 2 zeigt im wesentlichen denselben Aufbau der erfindungsgemäßen Vorrichtung 10. Die Rillenformeinrichtung 6 ist bei dieser Ausführung am vorderen Ende des Hohlkörpers 11, einem Bolzen 13, ausgebildet, und liegt - in Bewegungsrichtung gesehen - unmittelbar vor der Mündung der Bohrung 16, durch die das Verstärkungselement 13 zugeführt wird. Aus Fig. 7 kann im Detail die Ausbildung des vorderen Endes des Bolzen 13 mit der pflugscharähnlichen Rillenschneide 9 und der Mündung der Bohrung 16 ersehen werden. Als Rillenschließeinrichtung 8 dient auch bei dieser Ausführung das durch das Ende des rückversetzten Abschnittes 14 der Führungsfläche 5 gebildete Glättelement durch das die aufgeworfenen Wulste 15 wieder verschlossen werden.

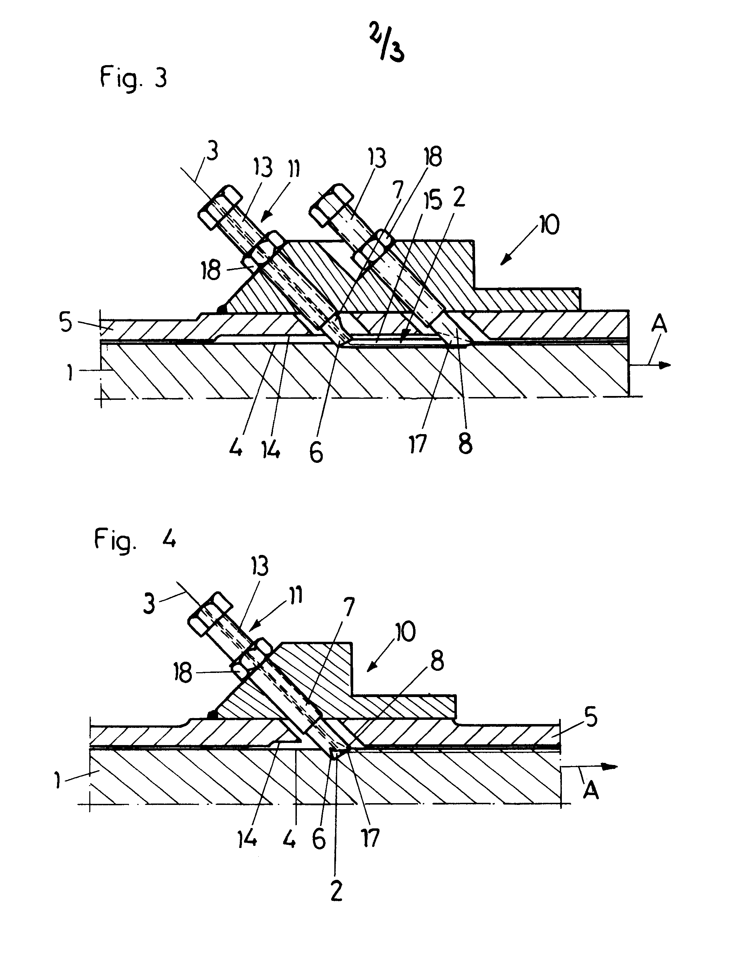

Die Fig. 3 zeigt ein weiteres Ausführungsbeispiel, bei dem die Einrichtung 7 zur Zuführung des Verstärkungselementes 3 und die Rillenformeinrichtung 6 wie bei der Ausführung nach Fig. 2 am vorderen Ende eines Bolzens 13 vorgesehen sind. Zusätzlich ist bei dieser jedoch noch ein zweiter Bolzen 13 mit Abstand zum ersten angeordnet, dessen vorderes Ende die Rillenschließeinrichtung 8 trägt. Sie wird in diesem Teil durch zwei einander nähernde Führungsflächen 17 gebildet, die so geformt sind, daß die aufgeworfenen Wülste 15 erfaßt und in einer dem Aufschneiden etwa umgekehr entsprechenden Bewegung in die Rille 2 hineingedrückt werden. Hierdurch wird eine möglichst geringe Störung des Kunststoffgefüges erzielt, was insbesondere bei härtenden Kunstharzen, die mit Füllstoffen versetzt sind, von Vorteil ist.

Schließlich zeigt die Fig. 4 noch eine besonderes vorteilhafte Ausführung, bei der am vorderen Ende eines einzigen Bolzens 13, der als Hohlkörper mit axialer Bohrung 16 ausgebildet ist, sowohl die Rillenformeinrichtung 6 als auch die Rillenschließeinrichtung 8 angeordnet sind. Wie im Detail aus Fig. 8 besser ersichtlich, ist am vorderen Ende des Bolzens 13 - in Bewegungsrichtung gesehen - zuerst die Rillenformeinrichtung 6 in Gestalt der Rillenschneide 9, unmittelbar anschließend die Mündung der Bohrung 16 als Teil der Zuführeinrichtung 7 für das Verstärkungselement 3 und diametral zur Rillenschneide 9 die Rillenschließeinrichtung 8, die wie bei der Ausführung nach Fig. 3 wiederum durch zwei Führungsflächen 17 gebildet ist. Die aufgeschnittene Rille 2 wird also sofort anschließend nach dem Einlegen des Verstärkungselementes 3 wieder geschlossen.

Die Fig. 5 und 6 zeigen Längsschnitte durch die als Bolzen 13 ausgebildeten Hohlkörper 11 der Fig. 2 und 4. Zur Verstellung der Schnittiefe sind die Bolzen 13 bevorzugt als Schraubbolzen ausgegbildet, die in die Vorrichtung 10 eingeschraubt werden. Eine Gegenmutter 18 verbindet die selbsttätige Lösung bzw. Verdrehung der Bolzen 13.

Ein weiterer Vorteil der Ausbildung der Zuführeinrichtung 7 als Schraubbolzen liegt auch darin, daß Schraubbolzen mit unterschiedlicher lichter Weite der Bohrungen 16 in einfacher Weise in das Führungsstück 5 eingesetzt werden können, sodaß Verstärkungselemente mit unterschiedlicher Querschnitten eingearbeitet werden können.

Wie bereits erwähnt, kann das Verstärkungselement 3 auch diskontinuierlich in den weiten Bereich des Kunststoffteiles 1 eingebracht werden, indem die Rillen etwa durch einen Preßstempel geformt, die Verstärkung eingelegt und anschließend wieder die Rillen verschlossen werden. Mit dieser Ausführung ist auch die Einbettung von Verstärkungsgittern od.dgl. denkbar.

- 12 -

Patentansprüche :

1. Verfahren zur Herstellung von längliche Verstärkungselemente, insbesondere Glasfasern großer Länge enthaltenden Kunststoffteilen, dadurch gekennzeichnet, daß in einen weichen Oberflächenbereich (4) des Kunststoffteiles (1) mindestens eine Rille (2) eingeformt wird, worauf mindestens ein Verstärkungselement (3) in die Rille (2) eingelegt und diese vor Erhärtung des Oberflächenbereiches (4) wieder geschlossen wird.

2. Verfahren nach Anspruch 1, dadurch gekennzeichnet, daß der Kunststoffteil (1) entlang eines Führungsstückes (5) einer ortsfesten Vorrichtung (10) bewegt wird.

3. Vorrichtung zur Durchführung des Verfahrens nach Anspruch 1, dadurch gekennzeichnet, daß die Vorrichtung (10), die vorzugsweise mit einer Heizeinrichtung versehen ist, mindestens eine in den weichen Oberflächenbereich (4) des Kunststoffteiles (1) eindringende Rillenformeinrichtung (6), mindestens eine Einrichtung (7) zum Einlegen eines Verstärkungselementes (3) und mindestens eine Rillenschließeinrichtung (8) aufweist.

4. Vorrichtung nach Anspruch 3, dadurch gekennzeichnet, daß die Vorrichtung (10) und der zu verstärkende Kunststoffteil (1) relativ zueinander verschiebbar sind.

5. Vorrichtung nach Anspruch 3 und 4, dadurch gekennzeichnet, daß die Rillenformeinrichtung (6) eine pflugscharähnliche Rillenschneide (9) aufweist.

6. Vorrichtung nach Anspruch 3 und 4, dadurch gekennzeichnet, daß die Einrichtung (7) zum Einlegen des Verstärkungselementes (3) aus einem in das Führungsstück (5) der Vorrichtung (10) eingesetzten und in der Rille (2) mündenden, zylindrischen Hohlkörper (11) besteht.

7. Vorrichtung nach Anspruch 6, dadurch gekennzeichnet, daß die Achse des Hohlkörpers (11) in einem schrägen Winkel zur Bewegungsrichtung des Kunststoffteiles (1) verläuft.

8. Vorrichtung nach Anspruch 3 oder 4, dadurch gekennzeichnet, daß die Rillenschließeinrichtung (8) durch ein Glättelement (12) gebildet ist.

9. Vorrichtung nach Anspruch 5 und/oder 8, dadurch gekennzeichnet, daß die Rillenschneide (9) und/oder das Glättelement (12) am Führungsstück (5) ausgebildet sind.

10. Vorrichtung nach Anspruch 5 und/oder 8, dadurch gekennzeichnet, daß die Rillenschneide (9) bzw. die Rillenschließeinrichtung (8) an einen in das Führungsstück (5) eingesetzten Bolzen (13) ausgebildet sind.

11. Vorrichtung nach Anspruch 6 und 10, dadurch gekennzeichnet, daß der Bolzen (13), an dem die Rillenschneide (5) und/oder die Rillenschließeinrichtung (8) ausgebildet sind, gleichzeitig als Hohlkörper für die Zuführung des Verstärkungselementes (3) ausgebildet ist.

12. Vorrichtung nach Anspruch 6, 10 oder 11, dadurch gekennzeichnet, daß der Bolzen (13) ein Schraubbolzen ist.

Fig. 1

Fig. 2

0002799

2/3

Fig. 3

Fig. 4

0002799

3/3

Fig. 5

Fig. 6

Fig. 7

Fig. 8

**Europäisches Patentamt**

# EUROPÄISCHER RECHERCHENBERICHT

EP 78 101 790.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – B – 1 704 043 (HOECHST) <br> * Spalte 2, Zeile 48 bis Spalte 3, Zeile 2; Fig. 1 * <br><br> -- <br><br> DE – U – 6 945 152 (HOECHST) <br> * Anspruch 1; Fig. * <br><br> -- <br><br> DE – B – 1 268 817 (WESTERN ELECTRIC) <br> * Spalte 3, Zeilen 12 bis 30; Fig. 1 bis 4 * <br><br> -- | 1,3,4, 6,7,8, 9 <br><br><br><br> 1,3,4, 6,7,8 <br><br><br><br> 1 |
| A | FR – A – 1 385 101 (KRONE) <br> * ganzes Dokument * <br><br> ---- | |

### KLASSIFIKATION DER ANMELDUNG (Int.Cl.²)

B 29 D 3/00
B 29 D 3/02

### RECHERCHIERTE SACHGEBIETE (Int. Cl.²)

B 29 C 17/10
B 29 C 27/02
B 29 D 3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 11-04-1979 | BRUCK |

EPA form 1503.1 06.78